(19) Europäisches Patentamt
European Patent Office
Office européen des brevets

(11) **EP 2 354 599 A1**

(12) **DEMANDE DE BREVET EUROPEEN**

(43) Date de publication:
**10.08.2011 Bulletin 2011/32**

(51) Int Cl.:
*F16H 61/04* (2006.01)   *F16H 63/50* (2006.01)

(21) Numéro de dépôt: **10306456.4**

(22) Date de dépôt: **20.12.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **29.01.2010 FR 1050640**

(71) Demandeur: **Renault s.a.s.**
**92100 Boulogne-Billancourt (FR)**

(72) Inventeur: **Vandekerkhove, Rémi**
**75012, PARIS (FR)**

(54) **Système et procédé de pilotage de boîte de vitesses automatique**

(57) Un système de pilotage d'une boîte de vitesses (1) de véhicule automobile munie d'au moins un moyen d'embrayage (19,20) pilotable en couple, comprend un module électronique de passage (26) apte à piloter un basculement d'un premier rapport de la boîte à un deuxième rapport de la boîte, le module électronique de passage (26) étant apte à imposer un couple de consigne au moteur (5) du véhicule et à imposer un couple transmissible au moyen d'embrayage (19, 20). Le module de passage (26) comprend un module de synchronisation (28) configuré pour délivrer, pendant une phase de synchronisation, une consigne de couple moteur calculée en fonction d'une première accélération angulaire de consigne, et une consigne de couple transmissible calculée en fonction d'une seconde accélération angulaire de consigne. Les deux accélérations de consigne sont pilotées par le module de synchronisation pour converger vers une même valeur objectif d'accélération du moteur (5). Le module de synchronisation est en outre configuré pour déterminer la première accélération angulaire de consigne comme un barycentre entre la valeur objectif d'accélération du moteur (5), et une valeur d'accélération moyenne angulaire. La valeur d'accélération moyenne angulaire est définie par une fonction bornée, soit par une première fonction linéaire d'une consigne de couple primaire, soit par une seconde fonction affine de la même consigne de couple primaire.

FIG.1

EP 2 354 599 A1

**Description**

L'invention se situe dans le domaine des boîtes de vitesses automatiques à passage de vitesses sans rupture de couple, telles que les boîtes de vitesses automatiques à double embrayage, ou les boîtes de vitesses à coupleurs coniques compacts, utilisées dans les véhicules automobiles. Dans le cas du double embrayage, un couple moteur est transmis d'un arbre primaire au travers d'un système démultiplicateur, vers un premier ou un deuxième arbre secondaire, puis de l'arbre secondaire au travers d'un embrayage vers un train de roues du véhicule. Simultanément, un rapport différent de celui du système démultiplicateur engagé peut être présélectionné sur le deuxième arbre secondaire relié par un deuxième embrayage, à cet instant ouvert, au train de roues du véhicule. Pour passer du rapport engagé au rapport sélectionné, on effectue une « bascule de couple » en ouvrant progressivement l'embrayage du premier arbre secondaire pendant que l'on ferme l'embrayage du deuxième arbre secondaire.

Dans une boîte de vitesses à coupleurs coniques compacts, certains rapports de vitesse, par exemple les rapports de 2ème, 3ème, 4ème et 5ème sont engagés en permanence entre des pignons fous d'un arbre primaire relié au moteur et des pignons fixes d'un arbre secondaire relié au train de roues du véhicule. Chaque pignon fou de l'arbre primaire peut être solidarisé en rotation avec l'arbre primaire au moyen d'un coupleur conique compact qui joue le rôle d'un embrayage local entre le pignon fou et l'arbre primaire. Pour le groupe de rapports ainsi équipé de coupleurs coniques compacts, le changement de rapports se fait en effectuant une « bascule de couple », en ouvrant progressivement le coupleur du rapport engagé et en fermant simultanément, de manière progressive, le coupleur du rapport vers lequel on souhaite basculer.

Une fois la bascule de couple effectuée, ou suivant les configuration de roulage, juste avant cette bascule de couple, le régime du moteur doit être synchronisé, c'est-à-dire amené de manière aussi continue que possible, vers sa valeur optimale correspondant au nouveau rapport engagé ou à engager. Si des irrégularités se produisent dans le pilotage en couple du moteur ou du coupleur en cours d'engagement, l'évolution du régime du moteur peut être sujette à des fluctuations intempestives.

Afin d'essayer de maintenir une bonne qualité de passage malgré des imprécisions dans la réalisation des consignes de couple, une méthode utilisée couramment consiste à calculer une consigne de régime de rotation tout au long du passage, et de réguler le régime moteur réel sur cette consigne par modulation du couple moteur. Ainsi, pour un passage montant sous charge, à chaque pas de calcul, si le régime moteur est supérieur à la consigne, le couple consigne du moteur sera réduit, s'il est inférieur, le couple consigne du moteur sera augmenté. Cette technique de régulation peut conduire à des instabilités lorsque la somme des imprécisions de pilotage en couple du coupleur engagé et du moteur est importante. Ces instabilités s'expliquent par le fait que le pilotage réagit aux valeurs courantes du couple, sans anticiper la courbe de variation à venir.

Pour remédier à ces instabilités, on peut proposer de piloter en parallèle le couple du moteur et le couple transmissible par le coupleur (ou l'embrayage actif) transmettant le couple du moteur aux roues, et d'imposer une valeur objectif à la dérivée de régime en fin de phase de synchronisation.

Une solution possible consiste, entre autres, à imposer au couple moteur une valeur "plateau" sur une première période de temps, pendant laquelle se fera l'essentiel de l'adaptation en régime, puis à réguler le retour du couple moteur de la valeur plateau vers le couple final demandé par le conducteur, de manière à éviter les instabilités de régime et de couple en fin de phase de synchronisation. La valeur "plateau" est déterminée par le différentiel de régime recherché, et par la durée de synchronisation souhaitée.

Or, pour les passages montants sous charge, si le couple minimal auquel la consigne de couple moteur descend pendant la synchronisation est inférieur d'environ 50% (le seuil dépend des moteurs) du couple final recherché, le temps nécessaire pour que le couple moteur réel puisse remonter à la valeur du couple final sera beaucoup trop important.

De même, pour les rétrogradages sur erre (véhicule en décélération), le couple conducteur à atteindre en fin de passage est négatif, donc si le couple maximal auquel la consigne monte pendant la relance de régime est supérieur à un certain seuil (environ 15~20Nm, suivant les moteurs), le temps que nécessaire au couple moteur réel pour revenir en situation de frein moteur en fin de passage sera beaucoup trop important.

On aura donc un décalage sensible entre les valeurs de couple de consigne, et les valeurs réelles, si bien que les critères de continuité de régime appliqués dans la stratégie de pilotage ne produiront pas leurs effets.

Le véhicule subit alors des à coups de couple lors en fin de phase de synchronisation.

L'invention a pour but de remédier à ces inconvénients en proposant un système et un procédé de pilotage d'une boîte de vitesses automatique à passage sous couple permettant, lors d'un changement de rapport, de gérer, de manière aussi continue que possible dans le temps, la phase de synchronisation du régime du moteur, pour l'amener du régime correspondant au rapport précédemment engagé, à celui correspondant au rapport en cours d'engagement, en s'affranchissant en particulier d'un risque d'instabilités lié aux amplitudes limites de modulation du régime moteur.

Ainsi, un système de pilotage d'une boîte de vitesses de véhicule automobile munie d'au moins un moyen d'embrayage pilotable en couple, comprend un module électronique de passage apte à piloter un basculement d'un premier rapport de la boîte à un deuxième rapport de la boîte. Le module électronique de passage est apte à imposer un couple de consigne au moteur du véhicule et à imposer un couple transmissible au moyen d'embrayage. Le module de passage comprend un module de synchronisation configuré pour délivrer, pendant une phase de synchronisation, une consigne de couple moteur (par exemple désignée par $C_m$) calculée en fonction d'une première accélération angulaire de consigne (par exemple désignée par $\omega_0$), et une consigne de couple transmissible (par exemple désigné par $C_t$) calculée en fonction d'une seconde accélération angulaire de consigne (par exemple désignée par $\omega_f$). Les deux accélérations de consigne sont pilotées par le module de synchronisation pour converger vers une même valeur objectif (par exemple désignée par $\Omega$) d'accélération du moteur. Le module de synchronisation est configuré pour déterminer la première accélération angulaire de consigne ($\omega_0$) comme un barycentre entre la valeur objectif ($\Omega$) d'accélération du moteur, et une valeur d'accélération moyenne angulaire (par exemple désignée par A), définie par une fonction bornée, soit par une première fonction linéaire d'une consigne de couple primaire (par exemple désignée par $\hat{C}$), soit par une seconde fonction affine de la même consigne de couple primaire ($\hat{C}$).

Selon un mode de réalisation préféré, le module de synchronisation est configuré pour calculer la consigne de couple primaire ($\hat{C}$) à partir d'une valeur de couple cartographiée en fonction d'une pression ou d'une position de pédale d'accélération du véhicule, à laquelle valeur de couple est soustraite une valeur constante, positive ou nulle, multipliée par l'accélération angulaire effective ($\frac{dN}{dt}$) du moteur. L'accélération angulaire effective ($\frac{dN}{dt}$) du moteur, est la dérivée par rapport au temps d'une vitesse angulaire effective (par exemple désignée par N) du moteur. La pression ou la position de la pédale d'accélération est une fonction du temps (t), déterminée en temps réel par des capteurs de pression ou de position.

La première accélération angulaire ($\omega_0$) peut être une valeur fictive, homogène à une accélération angulaire, fonction du temps (par exemple désigné par t), et calculée par le module de synchronisation pour les besoins du calcul de la consigne de couple moteur ($C_m$). La seconde accélération angulaire ($\omega_f$) peut être une valeur fictive, homogène à une accélération angulaire, fonction du temps (t), et calculée par le module de synchronisation pour les besoins du calcul de la consigne de couple transmissible ($C_t$).

La boîte automatique est avantageusement une boîte automatique à rapports discrets, à passage de vitesse sans rupture de couple, c'est-à-dire soit une boîte de vitesses à double embrayage, soit une boîte de vitesses avec des coupleurs pilotables en couple associés à au moins deux rapports de la boîte.

La phase de synchronisation est un intervalle de temps pendant lequel le module électronique de passage agit sur la consigne de couple du moteur, ainsi que, au besoin, sur une consigne de couple transmissible par un moyen d'embrayage, de manière à amener le régime du moteur, de son régime stabilisé avant le changement de rapport, à un régime qui pourra rester stable après le changement de rapport, sans induire de discontinuités dans la vitesse de rotation des roues. Avantageusement, cette phase de synchronisation peut avoir lieu soit juste avant, soit juste après, avoir changé de système de démultiplication actif entre le moteur et les roues du véhicule.

De manière préférentielle, le module de synchronisation est configuré pour déterminer la seconde accélération angulaire ($\omega_f$) à partir de la vitesse angulaire effective (N) du moteur, d'une vitesse angulaire ( par exemple désignée par R) des roues, et à partir d'un couple effectif (par exemple désigné par C) du moteur.

La vitesse angulaire de rotation des roues, la vitesse angulaire effective du moteur et le couple effectif du moteur sont des fonctions du temps (t) issues de mesures directes ou indirectes, en temps réel, sur le véhicule.

Selon un mode de réalisation préféré, le module de synchronisation est configuré pour déterminer par défaut la valeur d'accélération moyenne angulaire (A) comme une constante qui est fonction du premier rapport, du deuxième rapport et de la vitesse angulaire (R) de rotation des roues, puis à appliquer à cette constante la borne définie par la première fonction linéaire ou par la seconde fonction affine.

La constante peut avantageusement être une valeur proportionnelle à la différence entre la vitesse angulaire du moteur correspondant au régime (ou vitesse angulaire de rotation) des roues au début de la phase de synchronisation, et entre la vitesse angulaire du moteur correspondant au même régime de rotation des roues après le changement de rapport. La constante peut être obtenue en divisant cette différence entre les deux vitesses angulaires du moteur, par un temps de synchronisation souhaité qui peut être un paramètre fixe mémorisé par le module de synchronisation.

De manière préférentielle, le module de synchronisation est configuré pour identifier la première accélération angulaire ($\omega_0$) à la constante d'accélération moyenne angulaire (A) du moteur, tant que la valeur absolue de l'écart entre la vitesse angulaire effective (N) du moteur et une première vitesse angulaire cible (par exemple désignée par $n_1$) est supérieure à un premier seuil d'écart (par exemple désigné par $\Delta n_1$). Le seuil prédéfini ($\Delta n_1$) peut être un paramètre fixe mémorisé par le module de synchronisation.

De manière préférentielle, le module de synchronisation est configuré, quand la valeur absolue de l'écart entre la vitesse angulaire effective (N) du moteur et la première vitesse angulaire cible ($n_1$) est inférieure au premier seuil ($\Delta n_1$), pour déterminer la première accélération angulaire ($\omega_0$) comme un barycentre pondéré par cet écart, entre l'accélération moyenne angulaire (A), et la valeur objectif d'accélération ($\Omega$).

Les valeurs de pondération du barycentre ($\omega_0$ entre les deux points A et $\Omega$, sont donc $k|N-n_1|$ et $(1- k|N-n_1|)$,

k étant choisi pour que ces valeurs de pondération varient entre 0 et 1 quand |N-$n_1$| varie entre 0 et $\Delta n_1$, c'est-à-dire k=1/$\Delta n_1$.

Selon un mode de réalisation préconisé, le module de synchronisation est configuré pour définir la consigne de couple moteur ($C_m$) à partir de la consigne de couple primaire ($\hat{C}$), à laquelle il ajoute un terme proportionnel à une inertie (par exemple désignée par J) du moteur et proportionnel à la première accélération angulaire ($\omega_0$).

L'inertie J du moteur est une constante mécanique (par exemple en kg.m$^2$) permettant de relier l'accélération angulaire du moteur et le couple du moteur.

Selon un mode de réalisation préféré, le module de synchronisation est configuré pour définir la consigne de couple transmissible ($C_t$) par le moyen d'embrayage à partir de la consigne de couple primaire ($\hat{C}$), à laquelle un régulateur proportionnel intégral ajoute un terme correctif intégré à partir de l'erreur constituée par la différence entre la seconde accélération angulaire ($\omega_f$) et l'accélération angulaire effective ($\dfrac{dN}{dt}$) du moteur.

Avantageusement, le module de synchronisation est configuré pour identifier la seconde accélération angulaire ($\omega_f$) à une accélération inertielle égale à la différence entre le couple effectif (C) du moteur et la consigne de couple primaire ($\hat{C}$), divisée par l'inertie (J) du moteur, tant que la valeur absolue de l'écart entre la vitesse angulaire effective (N) du moteur et une deuxième vitesse angulaire cible (par exemple désignée par $n_{fin}$) est supérieure à un deuxième seuil (par exemple désigné par $\Delta n_2$).

Le seuil prédéfini ($\Delta n_2$) peut être un paramètre fixe mémorisé par le module de synchronisation. Avantageusement, le seuil prédéfini ($\Delta n_2$) est égal au seuil ($\Delta n_1$) utilisé pour déterminer la première vitesse angulaire. Selon certaines variantes de réalisation, ces deux seuils pourraient être différents.

Avantageusement, le module de synchronisation est configuré, quand la valeur absolue de l'écart entre la vitesse angulaire effective (N) du moteur et la deuxième vitesse angulaire cible ($n_{fin}$) est inférieure au deuxième seuil ($\Delta n_2$), pour déterminer la seconde accélération angulaire ($\omega_f$) comme un barycentre pondéré par cet écart, entre l'accélération inertielle, et la valeur objectif ($\Omega$) d'accélération du moteur.

Selon un mode de réalisation préférentiel, le module de synchronisation est configuré pour calculer la deuxième vitesse angulaire cible ($n_{fin}$) en multipliant la vitesse angulaire actuelle (R) de rotation des roues par un coefficient de démultiplication ($k_2$) associé au deuxième rapport. Le module de synchronisation peut en outre être configuré pour calculer la première vitesse angulaire cible ($n_1$) comme une valeur intermédiaire entre la deuxième vitesse angulaire cible ($n_{fin}$), et la vitesse angulaire de rotation effective du moteur (N) au début de la phase de synchronisation.

La deuxième vitesse angulaire cible ($n_{fin}$) est une valeur fictive, fonction du temps (t), calculée pour représenter la vitesse angulaire qu'aurait le moteur si la phase de synchronisation était terminée, et que le régime de rotation des roues (R) était celui actuellement mesuré. La première vitesse angulaire cible ($n_1$) est une valeur fictive choisie pour être atteinte par la vitesse angulaire effective du moteur (N) avant la deuxième vitesse angulaire cible.

Selon un mode de réalisation particulier, la première vitesse angulaire cible et la seconde vitesse angulaire cible peuvent être confondues.

Avantageusement, le module de synchronisation est configuré pour calculer la valeur objectif d'accélération angulaire ($\Omega$) du moteur en multipliant l'accélération angulaire actuelle ($\dfrac{dR}{dt}$) des roues par un dt coefficient de démultiplication ($k_2$) associé au deuxième rapport.

L'accélération angulaire actuelle ($\dfrac{dR}{dt}$) des roues, est bien sûr la dt dérivée par rapport au temps de la vitesse angulaire (R) des roues. Selon un autre aspect, un procédé de pilotage d'un groupe motopropulseur de véhicule automobile comprenant un moteur et une boîte de vitesses munie d'au moins un moyen d'embrayage pilotable en couple, inclut une étape, pendant un changement d'un premier rapport vers un second rapport de la boîte, où le couple transmis aux roues du véhicule est obtenu en imposant au moteur une consigne de couple moteur ($C_m$) calculée en fonction d'une première accélération angulaire de consigne ($\omega_0$), et en imposant au moyen d'embrayage une consigne de couple transmissible ($C_t$) calculée en fonction d'une seconde accélération angulaire de consigne ($\omega_f$).

Les deux accélérations angulaires convergent vers une même valeur objectif ($\Omega$) d'accélération du moteur. La première accélération angulaire de consigne ($\omega_0$) est un barycentre entre la valeur objectif ($\Omega$) d'accélération du moteur et une valeur d'accélération moyenne angulaire (A), définie par une fonction bornée, soit par une première fonction linéaire d'une consigne de couple primaire ($\hat{C}$), soit par une seconde fonction affine de la même consigne de couple primaire ($\hat{C}$).

La consigne de couple primaire ($\hat{C}$) est de préférence déterminée à partir d'une valeur de couple cartographiée en fonction d'une pression ou d'une position de pédale d'accélération du véhicule.

Dans tous les modes de réalisation décrits plus haut, la valeur objectif d'accélération (Ω) du moteur est une variable en fonction du temps (t), de même que la vitesse angulaire cible $n_{fin}$, ce qui permet d'adapter le déroulement de la fin de la phase de synchronisation à l'évolution de la vitesse angulaire des roues pendant cette synchronisation. On peut cependant envisager des variantes de réalisation où ces deux valeurs seraient des constantes, calculées par exemple à partir de la vitesse de rotation des roues et de l'accélération angulaire des roues à un instant particulier sélectionné au début de la phase de synchronisation.

D'autres buts, avantages et caractéristiques de l'invention apparaîtront à l'examen de la description détaillée de quelques modes de réalisation donnés à titre d'exemples non limitatifs, et illustrés par les dessins annexés, sur lesquels :

- la figure 1 illustre une boîte de vitesses automatique de véhicule munie de coupleurs coniques compacts permettant d'effectuer certains changements de rapport, équipée d'un système de pilotage suivant l'invention ;
- les figures 2a et 2b illustrent des courbes types de régime et de couple caractéristiques d'un changement de rapport montant sous charge ;
- les figures 3a et 3b illustrent des courbes types de régime et de couple caractéristiques d'un changement de rapport montant sous charge ;
- la figure 4 illustre le mode de fonctionnement d'un module de synchronisation du système de pilotage de la figure 1.

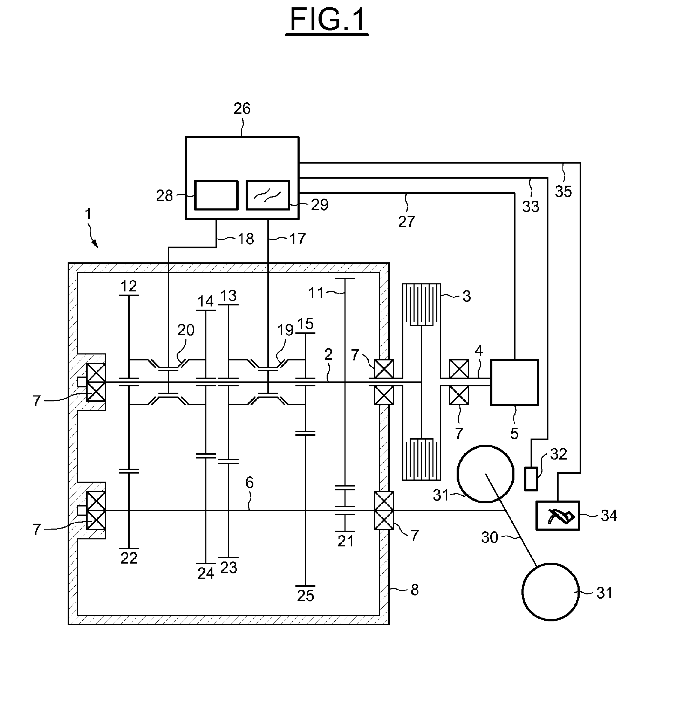

Tel qu'illustré sur la figure 1, une boîte de vitesses 1 comprend un arbre primaire 2 qui peut être couplé en rotation au travers d'un embrayage 3 avec un arbre de sortie 4 d'un moteur à combustion interne 5. La boîte de vitesses 1 comprend également un arbre secondaire 6 relié en rotation à au moins un train (30) de roues (31) d'un véhicule (non représenté). L'arbre primaire 2, l'arbre secondaire 6 et l'arbre moteur 4 sont en appui sur des paliers 7 solidaires d'un carter 8 de la boîte de vitesses 1. Sur l'arbre primaire, sont assemblés dans l'ordre quatre pignons fous 15, 13, 14, 12 constituant respectivement des pignons fous de, cinquième, troisième, quatrième et deuxième vitesses. Ces pignons engrènent respectivement avec des pignons fixes 25, 23, 24 et 22 solidaires de l'arbre secondaire 6. Un coupleur conique 19 est interposé entre les pignons 13 et 15, permettant de solidariser l'un ou l'autre pignon de l'arbre primaire 2. Un coupleur conique 20 est interposé entre les pignons 14 et 16, permettant de solidariser l'un ou l'autre pignon de l'arbre primaire 2.

Le coupleur 19, sous l'action d'une fourchette centrale (non représentée) est apte à solidariser soit le pignon 13 soit le pignon 15 en rotation avec l'arbre primaire 2, suivant un principe similaire à celui des synchroniseurs d'une boîte de vitesses manuelle classique, avec cependant la différence suivante : le couple transmissible entre l'arbre primaire 2 et le pignon 13 ou entre l'arbre primaire 2 et le pignon 15 peut être contrôlé de manière proportionnelle, par exemple en faisant varier la pression de la fourchette sur le coupleur, soit en direction du pignon 13, soit en direction du pignon 15. De manière similaire, le coupleur 20 permet de transmettre tout ou partie du couple de l'arbre primaire 2 au travers du pignon 14 ou au travers du pignon 12. Quand un des coupleurs 19 ou 20 est entièrement solidaire de l'un des pignons fous 13 à 16, de manière à ne plus autoriser de glissement de ce pignon par rapport à l'arbre primaire 2, alors le couple de l'arbre primaire 2 est entièrement transmis à l'arbre secondaire 6 avec le rapport de démultiplication correspondant au pignon verrouillé par le coupleur.

Les pressions exercées par les coupleurs 19 et 20 sur les pignons 13, 15, 14 et 12, sont pilotées par une unité de commande électronique 26 au travers de connexions 17 et 18. L'unité de commande électronique 26 pilote également au travers d'un groupe de connexions 27 le couple moteur délivré par le moteur 5 sur l'arbre primaire 2. Pour commander ce couple moteur, l'unité de commande électronique (UCE) 26 envoie une consigne de couple vers un calculateur de contrôle moteur (non représenté) qui détermine les paramètres de fonctionnement du moteur (par exemple la quantité de carburant injectée, le moment de l'injection, la quantité d'air admise dans le moteur, la pression de suralimentation...) permettant d'obtenir le couple moteur désiré. L'UCE 26 reçoit également par le groupe de connexions 27 des données de fonctionnement du moteur 5 telles que le régime (ou vitesse angulaire de rotation) du moteur et le couple effectivement développé par le moteur. L'UCE 26 reçoit par une connexion 33 une valeur de vitesse de rotation des roues motrices, provenant par exemple d'un tachymètre 32 disposé sur le train de roues motrices (31).

La boîte de vitesses 1 peut également comprendre des pignons de transmission de vitesse NON commandés par des coupleurs coniques compacts, comme par exemple un pignon de première vitesse 11 solidaire en rotation de l'arbre primaire 2 et engrenant avec un pignon fou 21 disposé sur l'arbre secondaire 6, ce pignon fou étant muni d'un système de synchronisation classique (non représenté).

L'unité de commande électronique 26 comprend un module 28 de synchronisation du régime de rotation du moteur.

L'UCE 26 dispose d'un calculateur 29 de consigne de couple en boucle ouverte, qui reçoit une pression ou une valeur de déplacement d'une pédale d'accélération 34 au travers d'une connexion 35, et qui reçoit, par le groupe de connexions 27, la valeur instantanée N de régime de rotation du moteur. Le calculateur 29 dispose d'une cartographie (non représentée) reliant la pression ou la valeur de déplacement de la pédale d'accélération 34, et une consigne de couple souhaitée par le conducteur du véhicule. Le calculateur 29 peut délivrer la valeur cartographiée comme consigne de couple primaire. Cependant, afin de tenir compte de l'inertie du moteur, on préférera des variantes de réalisation où le calculateur 29 délivre une valeur primaire $\hat{C}$ de consigne de couple, calculée en soustrayant à la valeur cartographiée le couple engendré par l'inertie du moteur, c'est-à-dire le terme $J.\dfrac{dN}{dt}$.

Avec : J : l'inertie du moteur, en kg.m$^2$, et $\dfrac{dN}{dt}$ l'accélération angulaire effective du moteur, calculée en dérivant par rapport au temps le régime N de rotation (ou vitesse angulaire de rotation) du moteur 5.

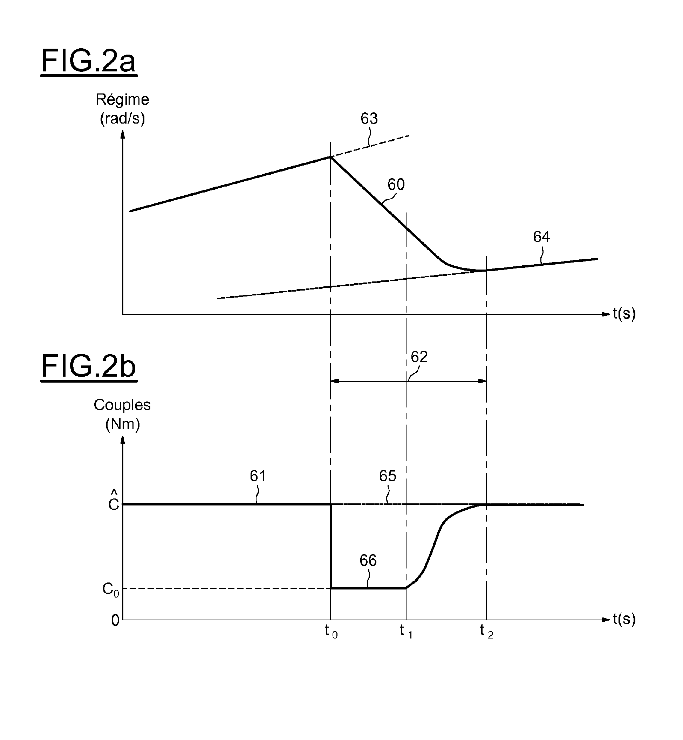

Les figures 2a, 2b représentent respectivement des courbes caractéristiques de régime et de couples du moteur 5 lors d'un changement de vitesses montant à faible charge avec une boîte de vitesse telle que décrite à la figure 1, par exemple lors d'un passage du troisième rapport au quatrième rapport. Ces courbes sont tracées par rapport à une même échelle de temps t. Pendant tout l'intervalle de temps représenté, l'embrayage principal 3 est fermé, donc les régimes de rotation de l'arbre moteur 4 et de l'arbre primaire 2 sont identiques.

Sur la figure 2a est représentée une courbe 60 indiquant la vitesse de rotation (ou régime) en radians par seconde de l'arbre primaire 2 en fonction du temps. L'échelle de temps horizontale t comprend notamment un instant $t_0$ de début de synchronisation, un instant $t_1$ de fin de phase linéaire, et un instant $t_2$ de fin de synchronisation.

Sur la figure 2a, une droite 63 en pointillés indique le régime du moteur 5 adapté à un roulement en troisième vitesse, pour les conditions courantes de charge, de vitesse et d'accélération souhaitées par le conducteur du véhicule. Le régime du moteur 5 correspondant à un roulage en quatrième vitesse, dans les conditions courantes de charge, de vitesse du véhicule, et d'accélération du véhicule, est indiqué par une droite en pointillés 64 située en dessous de la droite 63. La courbe 60 de régime du moteur suit la droite 63 jusqu'à l'instant $t_0$ de début de synchronisation. La courbe 60 de régime du moteur suit la droite 64 après l'instant $t_2$ de fin de synchronisation.

La courbe 60 décroît de manière sensiblement linéaire sur un intervalle de temps $t_0$-$t_1$, puis continue à décroître de manière à rejoindre de manière continue au second ordre (continue en valeur et continue en dérivé), la droite 64 au-delà de l'instant $t_2$ de fin de synchronisation.

Le profil de la courbe 60 est obtenu grâce au pilotage en couple du moteur 5 par l'UCE 26, suivant la courbe 61 de la figure 2b. Jusqu'à l'instant to, l'UCE 26 impose une consigne de couple primaire $\hat{C}$ au moteur 5. La valeur de la consigne de couple primaire $\hat{C}$ peut être une valeur de consigne de couple imposée par le conducteur par l'intermédiaire de l'enfoncement d'une pédale d'accélération. En pratique, elle varie relativement peu pendant la durée de la phase de synchronisation, c'est pourquoi elle est représentée comme courbe constante65 sur la figure 2b. La phase de synchronisation débute à un instant to, qui peut par exemple succéder à un basculement du couple transmis (du moteur vers les roues) d'un coupleur (par exemple 19) à un autre coupleur (par exemple 20). La décroissance linéaire du régime pendant l'intervalle de temps $t_0$-$t_1$ est obtenue en imposant un plateau 66 à la courbe 61 sur ce même intervalle de temps, la valeur $C_0$ en début du plateau 66 étant inférieure à la consigne de couple primaire C. A partir de l'instant $t_1$ où l'on constate que le régime 60 du moteur 5 est suffisamment proche du régime 64 correspondant au nouveau rapport engagé (ou, suivant les cas, au nouveau rapport en cours d'engagement), le couple 61 du moteur est piloté pour rejoindre la consigne de couple primaire 65, avec des critères permettant d'assurer également la convergence de la courbe de régime 60 du moteur vers la courbe 64 finale souhaitée. La valeur $C_0$ du plateau 66 est choisie de manière à obtenir une durée de synchronisation 62 ($t_2$-$t_0$) proche d'une valeur objectif prédéfinie. Plus la hauteur $\hat{C}$-$C_0$ de la marche menant au plateau 66 est élevée, plus la pente de la courbe 60 sur l'intervalle de temps $t_0t_1$ sera importante. Cependant, si la hauteur $\hat{C}$-$C_0$ de la marche devient trop importante (de l'ordre de 50% de la valeur de C), la durée $t_1t_2$ de retour du couple C0 vers le couple C augmente considérablement, faisant perdre le bénéfice d'une transition rapide sur le premier intervalle de temps $t_0t_1$.

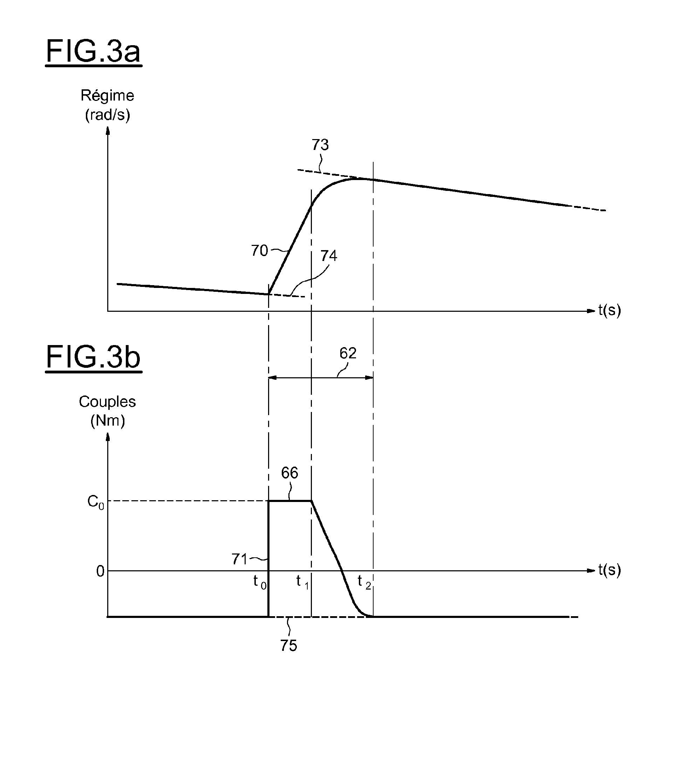

Les figures 3a, 3b représentent respectivement des courbes caractéristiques de régime et de couples du moteur 5 lors d'un rétrogradage de vitesses sur erre (véhicule en décélération) avec une boîte de vitesse telle que décrite à la figure 1, par exemple lors d'un passage du quatrième rapport au troisième rapport. Ces courbes sont tracées par rapport à une même échelle de temps t. Pendant tout l'intervalle de temps représenté, l'embrayage principal 3 est fermé, donc les régimes de rotation de l'arbre moteur 4 et de l'arbre primaire 2 sont identiques.

Sur la figure 3a est représentée une courbe 70 indiquant la vitesse de rotation (ou régime) en radians par seconde de l'arbre primaire 2 en fonction du temps. L'échelle de temps horizontale t comprend notamment un instant $t_0$ de début de synchronisation, un instant $t_1$ de fin de phase linéaire, et un instant $t_2$ de fin de synchronisation.

Sur la figure 3a, une droite 74 en pointillés indique le régime du moteur 5 adapté à un roulement en quatrième vitesse, pour les conditions courantes de charge, de vitesse et d'accélération souhaitées par le conducteur du véhicule. Le régime du moteur 5 correspondant à un roulage en troisième vitesse, dans les conditions courantes de charge, de vitesse du véhicule, et d'accélération du véhicule, est indiqué par une droite en pointillés 73 située au dessus de la droite 74. La courbe 70 de régime du moteur suit la droite 74 jusqu'à l'instant $t_0$ de début de synchronisation. La courbe 70 de régime du moteur suit la droite 73 après l'instant $t_2$ de fin de synchronisation.

La courbe 70 croît de manière sensiblement linéaire sur un intervalle de temps $t_0$-$t_1$, puis continue à croître de manière à rejoindre de manière continue au second ordre (continue en valeur et continue en dérivé), la droite 73 au-delà de l'instant $t_2$ de fin de synchronisation.

Le profil de la courbe 70 est obtenu grâce au pilotage en couple du moteur 5 par l'UCE 26, suivant la courbe 71 de la figure 3b. Jusqu'à l'instant to, l'UCE 26 impose une consigne de couple primaire $\hat{C}$ au moteur 5. La valeur de la consigne de couple primaire $\hat{C}$ peut être une valeur de consigne de couple imposée par le conducteur par l'intermédiaire de l'enfoncement d'une pédale d'accélération. En pratique, elle varie relativement peu pendant la durée de la phase de synchronisation, c'est pourquoi elle est représentée comme courbe constante 75 sur la figure 3b. La phase de synchronisation débute à un instant to, qui peut par exemple précéder un basculement du couple transmis (du moteur vers les roues) d'un coupleur (par exemple 20) à un autre coupleur (par exemple 19). La croissance linéaire du régime pendant l'intervalle de temps $t_0$-$t_1$ est obtenue en imposant un plateau 66 à la courbe 71 sur ce même intervalle de temps, la valeur $C_0$ en début du plateau 66 étant supérieure à la consigne de couple primaire C. A partir de l'instant $t_1$ où l'on constate que le régime 70 du moteur 5 est suffisamment proche du régime 73 correspondant au nouveau rapport engagé (ou, suivant les cas, au nouveau rapport en cours d'engagement), le couple 71 du moteur est piloté pour rejoindre la consigne de couple primaire 75, avec des critères permettant d'assurer également la convergence de la courbe de régime 70 du moteur vers la courbe 73 finale souhaitée. La valeur $C_0$ du plateau 66 est choisie de manière à obtenir une durée de synchronisation 62 ($t_2$-$t_0$) proche d'une valeur objectif prédéfinie. Plus la hauteur $\hat{C}$-$C_0$ de la marche menant au plateau 66 est élevée, plus la pente de la courbe 70 sur l'intervalle de temps $t_0t_1$ sera importante. Cependant, si la hauteur $\hat{C}$-$C_0$ de la marche devient trop importante (de l'ordre de 15 à 20Nm par exemple), la durée $t_1t_2$ de retour du couple C0 vers le couple C augmente considérablement, faisant perdre le bénéfice d'une transition rapide sur le premier intervalle de temps $t_0t_1$.

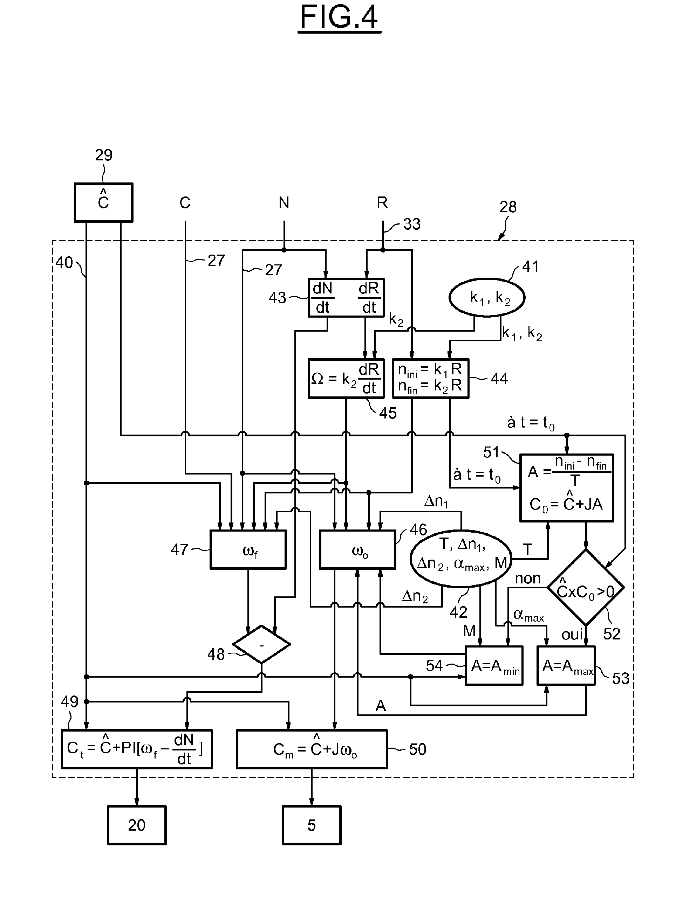

La figure 4 illustre le mode de fonctionnement du module de synchronisation 28 de la figure 1. On retrouve sur la figure 4 des éléments communs à la figure 1, les mêmes éléments portant alors les mêmes références.

Le mode de fonctionnement de la figure 4 est spécifique à la phase de synchronisation en régime du moteur, qui peut être effectuée, suivant les types de changement (rapport montant ou rapport descendant, en accélération ou au contraire "sur erre") juste avant ou juste après le basculement de couple transmis d'un coupleur à l'autre coupleur. Ce mode de fonctionnement est surtout pertinent dans le cas d'un passage de vitesses montant sous charge, ou dans le cas d'un rétrogradage de vitesse "sur erre" (véhicule en décélération). Dans l'exemple de la figure 4, on suppose que l'on vient d'effectuer la première partie d'un passage montant sous charge de la troisième vitesse (pignon 13 engagé avec le coupleur 19) à la quatrième vitesse (pignon 14 engagé avec le coupleur 20). Dans ce type de passage, on effectue d'abord une bascule de couple du coupleur 19 vers le coupleur 20, puis on effectue la synchronisation de régime du moteur.

Le module de synchronisation 28 reçoit à chaque instant t, du calculateur 29, par une connexion 40, une valeur $\hat{C}$(t) correspondant à une consigne de couple primaire. Le module de synchronisation 28 reçoit également, par le groupe de connexion 27, une valeur instantanée C(t) de couple développée par le moteur 5 et une valeur instantanée N(t) de régime de rotation (ou vitesse angulaire de rotation) de l'arbre moteur 4.

Le module de synchronisation 28 reçoit également par la connexion 33, une valeur R(t) de régime (ou vitesse angulaire de rotation) des roues 31.

Le module 28 dispose dans un groupe de mémoires 41 de rapport de démultiplication $k_1$, $k_2$, $k_3$...permettant de recalculer la vitesse de rotation de l'arbre moteur 4 en fonction de la vitesse de rotation des roues 31.

Le module 28 dispose dans un bloc de mémoires 42 paramétrable par le conducteur ou par un agent d'entretien du véhicule, d'une valeur T représentant une durée maximale souhaitée de synchronisation, et de deux valeurs seuils $\Delta n_1$, et $\Delta n_2$ représentant une différence de régime de rotation. Dans le bloc 42 sont également stockées deux valeurs $\alpha_{max}$ et M, la première étant une valeur sans dimension, et la seconde représentant une valeur de couple.

Les valeurs N de régime de rotation du moteur et R de régime de rotation des roues sont dérivées par rapport au temps t par un bloc de calcul 43. La dérivée de régime de rotation des roues est ensuite envoyée vers un bloc 45 où elle permet de calculer une valeur $\Omega$ qui est une valeur objectif d'accélération de l'arbre moteur. La valeur $\Omega$ est calculée en utilisant un rapport de démultiplication $k_2$ associé au nouveau rapport engagé ou à engager, c'est-à-dire ici la quatrième vitesse. La dérivée par rapport au temps du régime moteur est envoyée vers un soustracteur 48. Un bloc 44 reçoit la valeur R de régime de rotation des roues et multiplie cette valeur par les rapports de démultiplication $k_1$ et $k_2$ associés respectivement au rapport en cours de désengagement et au nouveau rapport en cours d'engagement. Il délivre ainsi deux valeurs $n_{ini}$(t) et $n_{fin}$(t) correspondant à un régime théorique initial de rotation de l'arbre moteur 4 et à un régime cible de rotation de l'arbre moteur 4 à l'instant t après synchronisation.

Suivant certaines variantes de réalisations, le bloc 44 pourrait également délivrer une valeur $n_1$(t) intermédiaire entre $n_{ini}$(t) et $n_{fin}$(t), et qui serait envoyée en lieu et place de la valeur $n_{fin}$(t) vers le bloc 46. Dans la variante de réalisation considérée, la même valeur $n_{fin}(t)$ est toujours envoyée vers le bloc 47.

Les valeurs $n_{ini}$ et $n_{fin}$ correspondant à un instant $t_0$ de début de synchronisation sont envoyées à un bloc de calcul 51 qui calcule une accélération angulaire moyenne A de l'arbre moteur et la transmet au bloc 46. La valeur A est une constante qui représente en première approximation la variation de régime de rotation de l'arbre moteur entre le début de la phase de synchronisation et la fin de la phase de synchronisation. Elle a pour valeur :

$$A = \frac{n_{ini} - n_{fin}}{T}(t_0).$$

Le bloc 51 calcule également à l'instant $t_0$ de début de synchronisation, un couple initial de régulation $C_0 = \hat{C}(t_0) + JA$, qui correspond à la valeur initiale du plateau 66 des courbes 61 et 71 des figures 2b et 3b. Le bloc 51 envoie ensuite cette valeur vers un bloc 52, qui reçoit également la valeur $\hat{C}(t_0)$ par la connexion 40. Le bloc 52 teste si le véhicule se trouve dans le cas d'un passage montant sous charge ($C_0 \times \hat{C}(t_0) > 0$) ou dans le cas d'un rétrogradage sur erre ($C_0 \times \hat{C}(t_0) < 0$). Dans le premier cas, il active un bloc de calcul 53, qui délivre au bloc 46 une valeur minorée $A_{max}(t)$ de la valeur initialement calculée A. Dans le second cas, il active un bloc de calcul 54, qui délivre au bloc 46 une valeur majorée $A_{min}(t)$ de la valeur initialement calculée A. Les blocs 53 et 54 lisent respectivement les valeurs des paramètres $\alpha_{max}$ et M dans le bloc mémoire 42.

La fonction $A_{mas}$ est minorée par une fonction $\omega_{0\_min}(t) = \dfrac{\hat{C}(t) x \alpha_{max}}{J}$ qui est une fonction linéaire de $\hat{C}(t)$.

La fonction $A_{min}$ est majorée par une fonction $\omega_{0\_min}(t) = \omega_{0\_max}(t) = \dfrac{M - \hat{C}(t)}{J}$ est une fonction affine de $\hat{C}(t)$.

J est l'inertie mécanique en rotation du moteur, en kg. $m^2$,

Le bloc 46 calcule alors une première consigne d'accélération angulaire $\omega_0(t)$ en fonction des valeurs $\Omega(t)$, $n_{fin}(t)$, $A_{max}$ ou $A_{min}$, que lui délivrent les blocs 44, 45 et 51, et en fonction du régime de rotation N(t) de l'arbre moteur. Le bloc 47 calcule une deuxième consigne d'accélération angulaire $\omega_f(t)$ en fonction des valeurs $\Omega(t)$, $n_{fin}(t)$, délivrées par les blocs 44, 45, en fonction du régime N(t) et du couple C(t) du moteur, et en fonction de la consigne de couple primaire $\hat{C}(t)$. Les modes de calcul des blocs 46 et 47 sont paramétrés par les valeurs $\Delta n_1$, et $\Delta n_2$ stockée dans le bloc mémoire 42.

Un soustracteur 48 effectue la différence de la consigne d'accélération $\omega_f(t)$ et de l'accélération effective $\dfrac{dN}{dt}(t)$ de l'arbre moteur.

Cette différence est envoyée sur un régulateur proportionnel intégral d'un bloc 49 qui ajoute la sortie du régulateur à la consigne de couple primaire $\hat{C}$. Cette somme $C_t$ est envoyée par le bloc 49 comme consigne de couple au coupleur 20. Un bloc 50 effectue la somme de la consigne de couple primaire $\hat{C}(t)$ et de la première consigne d'accélération $\omega_0(t)$ multipliée par l'inertie J du moteur 5, et délivre le résultat $C_m$ comme valeur de couple consigne au moteur 5.

Plus précisément, les étapes de calcul mises en oeuvre par le module de synchronisation 28 et décrites sur la figure 4 sont les suivantes :

\*Le bloc 43 calcule la dérivée par rapport au temps ($\dfrac{dN}{dt}$, en rad/$s^2$) du régime de rotation du moteur 5, qui est aussi le régime de rotation de l'arbre moteur 4, (N(t), en rad/s) et de la dérivée du régime de rotation des roues ($\dfrac{dR}{dt}$, en rad/$s^2$) du régime de rotation des roues 31 (R, en rad/s).

\*Le bloc 44 calcule les régimes moteur ($n_{ini}$, $n_{fin}$) correspondants au rapport initial et au rapport final (dans l'exemple choisi pour la figure 4, la troisième vitesse et la quatrième vitesse) eu égard au régime de rotation des roues (R). Ces régimes moteur "a posteriori" ont pour valeurs :

$n_{ini} = k_1 R$
$n_{fin} = k_2 R$

$k_1$ et $k_2$ sont des grandeurs adimensionnelles, stockées dans le bloc mémoire 41.

\*Le bloc 45 calcule une valeur objectif $\Omega$ d'accélération angulaire de l'arbre moteur 4 : égale à la dérivée de régime de roues multipliée par le rapport de démultiplication du rapport en cours d'engagement ($k_2$), soit $\Omega = k_2 \dfrac{dR}{dt}$

Cette accélération angulaire est celle qu'aurait l'arbre moteur si la synchronisation était déjà effectuée, tout en respectant l'historique actuel de vitesse de rotation des roues. Cette accélération est celle vers laquelle on souhaite faire converger l'accélération de l'arbre moteur en fin de synchronisation, pour une transition aussi fluide que possible vers un régime stabilisé, avec le nouveau rapport engagé (dans l'exemple choisi, pour un passage montant sous charge de 3$^{ème}$ vitesse en 4$^{ème}$ vitesse, le nouveau rapport est la quatrième vitesse, avec le coupleur 20 engagé sur le pignon 14).

*S'il est activé, le bloc 53 calcule une valeur minorante $A_{max}$ sous la forme suivante :

$$A_{max} = Max\ [A,\ \frac{\hat{C}(t)_x \alpha_{max}}{J}] = A_{max}\ (A,\ \hat{C},\ \alpha_{max})$$

*S'il est activé, le bloc 54 calcule une valeur majorante $A_{min}$ sous la forme suivante :

$$A_{min} = Min\ [A,\ \frac{M - \hat{C}(t)}{J}] = A_{max}\ (A,\ \hat{C},\ M)$$

*Le bloc 46 calcule une première accélération angulaire $\omega_0(t)$, qui est une accélération angulaire que l'on pourrait imposer à l'arbre moteur 4 pour que le couple résultant du couple développé par le moteur, et de la transmission de ce couple par le coupleur 20, fournisse un tel couple aux roues que : l'historique à venir de régime de rotation de roues, y compris sa dérivée, soit en continuité avec l'historique actuel de régime de rotation des roues. En fin de synchronisation, la dérivée de ce régime de rotation angulaire de l'arbre moteur doit donc valoir $\Omega$.

Sur le début de la phase de synchronisation, le régime du moteur peut varier de manière linéaire pour se rapprocher du régime final souhaité, donc avoir une dérivée constante. Un mode possible de calcul de la première accélération angulaire est le suivant :

$$Tant\ que\ \ \left|N(t) - n_1(t)\right| \geq \Delta n_1\ \ alors\ \ \omega_0(t) = A \qquad (équation\ 1)$$

Puis quand $|N(t) - n_1(t)| < \Delta n_1$,

$$alors \quad \omega_0(t) = A\ \frac{N(t) - n_1(t)}{\Delta n_1} + \Omega(t)\ x\ \left[1 - \frac{N(t) - n_1(t)}{\Delta n_1}\right] \qquad (équation\ 2)$$

$\Delta n_1$ (en rad/s) est une valeur de seuil, et T (en secondes) une durée de synchronisation. Tous deux sont sont des paramètres fixes ou réglables, stockés dans des mémoires dédiées du module 28. Dans le cas illustré à la figure 4, $n_1(t) = n_{fin}(t)$.

Cependant, la pente A de cette variation linéaire étant, sous réserve d'un suivi correct de la consigne, proportionnelle à la différence entre le couple moteur et le couple de consigne primaire, autrement dit, à la "marche" entre le couple de consigne primaire initial et le "plateau" de couple 66 des figures 2b et 3b, on décide de borner la pente A soit par la valeur $A_{max}$ (dans le cas d'un passage montant sous charge), soit par la valeur $A_{min}$ (dans le cas d'un rétrogradage sur erre). En limitant ainsi la valeur absolue de la pente A, on réduit les risque d'un défaut de suivi de la consigne par le moteur au moment où le couple moteur doit franchir la marche dans l'autre sens, pour revenir à la valeur de consigne de couple primaire C(t). Dans le cas, où, comme dans la figure 4, le véhicule effectue un passage montant sous charge (condition C x $\hat{C}$>0), le bloc 46 applique l'équation 1 et l'équation 2 en substituant la valeur $A_{max}$ à la valeur A.

Dans le cas, où le véhicule effectuerait un rétrogradage sur erre (condition C x $\hat{C}$<0),, le bloc 46 applique l'équation 1 et l'équation 2 en substituant la valeur $A_{mmin}$ à la valeur A.

*Le bloc 47 calcule une seconde accélération angulaire $\omega_f(t)$, qui est une autre forme d'accélération angulaire que l'on pourrait imposer à l'arbre moteur 4 pour que le couple résultant du couple développé par le moteur et de la transmission de ce couple par le coupleur 20, fournisse un couple aux roues tel que l'historique à venir de régime de rotation de roues, y compris sa dérivée, soit en continuité avec l'historique actuel de régime de rotation des roues. En fin de synchronisation, la dérivée de ce régime de rotation angulaire de l'arbre moteur doit donc valoir $\Omega(t)$. Sur le début de la phase de synchronisation, on choisit d'utiliser l'inertie J du moteur pour compenser les écarts entre le couple $C(t)$ effectif du moteur, et la consigne de couple primaire $\hat{C}(t)$ issue du calculateur 29. Un mode possible de calcul en boucle fermée de la première accélération angulaire est le suivant : Tant que

$$\left| N(t) - n_{fin}(t) \right| \geq \Delta n_2 , \ \text{alors} \ \omega_f(t) = \frac{C(t) - \hat{C}(t)}{J} = \Omega_i(t)$$

Puis quand $|N(t)-n_{fin}(t)|<\Delta n_2$, alors

$$\omega_f(t) = \Omega_i(t) x \frac{N(t) - n_{fin}(t)}{\Delta n_2} + \Omega(t) x \left[ 1 - \frac{N(t) - n_{fin}(t)}{\Delta n_2} \right]$$

Où J est l'inertie du moteur en kg. $m^2$,

$\Delta n_2$ (en rad/s) est une valeur de seuil, qui peut être égale ou différente de $\Delta n_1$. Pour gérer en parallèle la première et la seconde accélération angulaire, il est plus simple de choisir $\Delta n_1 = \Delta n_2$.

*Le bloc 50 délivre une consigne de couple moteur $C_m$. calculée à partir de la première accélération angulaire. $C_m(t) = \hat{C}(t) + J \ \omega_0(t)$

$C_m$ et $\hat{C}$ sont exprimés en [Nm], J en $[kg.m^2]$.

*Le bloc 49 délivre une consigne de couple au coupleur actif, ici le coupleur 20 qui vient d'être engagé avec le pignon 14 :

Cette consigne est égale à la consigne de couple primaire issue du calculateur 29, à laquelle on ajoute les variations d'un régulateur Proportionnel Intégral (PI), qui régule l'erreur $\left( \omega_f(t) - \frac{dN}{dt} \right)$ entre l'accélération angulaire effective du moteur et la seconde accélération angulaire de consigne, soit :

$$C_t(t) = \hat{C}(t) + PI\left( \omega_f(t) - \frac{dN}{dt} \right)$$

$C_t$ et $\hat{C}$ sont exprimés en [Nm]

Le gain du régulateur PI sera fonction du type de changement de rapport utilisé. Par exemple, dans le cas d'un rétrogradage en décélération, le gain PI sera l'inverse de celui appliqué pour les passages sous charge.

La boucle de régulation du moteur 5 est une boucle ouverte, car elle ne prend en compte que des mesures directes de paramètres de fonctionnement du véhicule, c'est-à-dire $R(t)$, $N(t)$ et $\hat{C}(t)$. La boucle de régulation du coupleur (ici du coupleur 20) est une boucle de régulation en boucle fermée, car elle prend en compte un écart entre une valeur de consigne $\omega_f$ et la valeur effective $\frac{dN}{dt}$ que l'on souhaite faire converger vers cette valeur de consigne.

Dans le cas où la consigne de couple moteur est inférieure au couple de perte du moteur (en décélération), l'écart entre le couple de perte et la consigne de couple moteur est retranché à la consigne de couple transmissible.

Si la consigne de couple moteur n'est pas réalisable car trop élevée (supérieure au couple maximum du moteur), l'écart entre le couple max et la consigne de couple moteur est retranché à la consigne de couple transmissible.

Suivant le mode de réalisation de la figure 4, $n_{fin}(t) = n_1(t)$.

Suivant un mode de réalisation amélioré, on peut choisir une valeur $n_1(t)$ intermédiaire entre $n_{ini}(t)$ et $n_{fin}(t)$, cette valeur $n_1(t)$ étant alors utilisée pour le calcul de $\omega_0(t)$.

La première accélération angulaire $\omega_0(t)$ est alors construite pour converger vers la valeur objectif d'accélération angulaire $\Omega(t)$ dès que le régime N du moteur approche atteint $n_1(t)$. La seconde accélération angulaire $\omega_f(t)$ est construite pour converger vers la valeur objectif d'accélération angulaire $\Omega(t)$ quand le régime N du moteur atteint le régime cible

$n_{fin}(t)$. Si la réponse en couple du moteur était instantanée, le couple du moteur parviendrait à la consigne finale recherchée (celle permettant de maintenir le régime final stabilisé du moteur) un peu avant que le couple du coupleur ne parvienne aussi à sa consigne finale en régime stabilisé. Comme le temps de réponse de suivi de consigne est supérieur pour le moteur par rapport au temps de réponse du coupleur, on peut, en adaptant l'écart entre $n_{fin}(t)$ et $n_1(t)$, obtenir une convergence presque simultanée du moteur et du coupleur vers leur couple final, et éviter des instabilités de régime en fin de phase de synchronisation, dues à la différence de temps de réponse entre moteur et coupleur.

L'objet de l'invention ne se limite pas aux exemples de réalisation décrits et peut faire l'objet de nombreuses variantes. Le système de pilotage décrit peut s'appliquer à une boîte de vitesses à coupleurs multiples, comme décrit, ou à une boite de vitesses à deux embrayages, les coupleurs étant, de fait, des embrayages particuliers. La phase de synchronisation peut avoir lieu avant ou après le transfert de couple d'un système coupleur à un autre système coupleur. Le mode de calcul de la consigne de couple primaire peut être remplacé par tout autre mode de calcul prenant en compte une instruction variable émanant du conducteur, par une pédale d'accélération ou par un autre organe de pilotage. Certaines valeurs cibles, telles que la valeur objectif d'accélération angulaire du moteur, ou la vitesse angulaire cible de celui-ci, pourraient être figées en début de phase de synchronisation au lieu d'être actualisée en fonction de la vitesse de rotation des roues.

Le système et le procédé de pilotage suivant l'invention permettent de réguler la synchronisation de régime du moteur en limitant les fluctuations intempestives liées aux imprécisions de suivi de consigne de couple. En effectuant la rétroaction de la régulation sur le couple transmis par le coupleur ou par l'embrayage, on s'assure de corriger la source d'erreurs plus importantes. En agissant sur des consignes de dérivées de régime plutôt que sur le régime lui-même, on améliore le niveau de continuité de la courbe de régime au premier ordre de dérivation. En limitant "a priori" l'ampleur du décrochage en couple, on maîtrise l'allongement de la durée de synchronisation, et on préserve la continuité des courbes de régime et de couple en fin de synchronisation. Le confort de conduite en est sensiblement amélioré.

**Revendications**

**1.** Système de pilotage d'une boîte de vitesses (1) de véhicule automobile munie d'au moins un moyen d'embrayage (19,20) pilotable en couple, comprenant un module électronique de passage (26) apte à piloter un basculement d'un premier rapport de la boîte à un deuxième rapport de la boîte, le module électronique de passage (26) étant apte à imposer un couple de consigne ($C_m$) au moteur (5) du véhicule et à imposer un couple transmissible ($C_t$) au moyen d'embrayage (19, 20), **caractérisé en ce que** le module de passage (26) comprend un module de synchronisation (28) configuré pour délivrer, pendant une phase de synchronisation, une consigne de couple moteur ($C_m$) calculée en fonction d'une première accélération angulaire de consigne ($\omega_0$), et une consigne de couple transmissible ($C_t$) calculée en fonction d'une seconde accélération angulaire de consigne ($\omega_f$), les deux accélérations de consigne étant pilotées par le module de synchronisation pour converger vers une même valeur objectif ($\Omega$) d'accélération du moteur (5), le module de synchronisation étant configuré pour déterminer la première accélération angulaire de consigne ($\omega_0$) comme un barycentre entre la valeur objectif ($\Omega$) d'accélération du moteur (5), et une valeur d'accélération moyenne angulaire ($\hat{A}$), définie par une fonction bornée, soit par une première fonction linéaire d'une consigne de couple primaire ($\hat{C}$), soit par une seconde fonction affine de la même consigne de couple primaire ($\hat{C}$).

**2.** Système de pilotage suivant la revendication 1, dans lequel le module de synchronisation (28) est configuré pour calculer la consigne de couple primaire ($\hat{C}$) à partir d'une valeur de couple cartographiée en fonction d'une pression ou d'une position de pédale d'accélération (34) du véhicule, à laquelle valeur de couple est soustraite une valeur constante, positive ou nulle, multipliée par l'accélération angulaire effective $\left( \dfrac{dN}{dt} \right)$ du moteur (5).

**3.** Système de pilotage suivant l'une des revendications précédentes, dans lequel le module de synchronisation (28) est configuré pour déterminer la seconde accélération angulaire ($\omega_f$) à partir d'une vitesse angulaire effective (N) du moteur (5), d'une vitesse angulaire (R) des roues (31), et à partir d'un couple effectif (C) du moteur (5).

**4.** Système de pilotage suivant l'une des revendications précédentes, dans lequel le module de synchronisation (28) est configuré pour déterminer par défaut la valeur d'accélération moyenne angulaire (A) comme une constante qui est fonction du premier rapport, du deuxième rapport et de la vitesse angulaire (R) de rotation des roues (31), puis à appliquer à cette constante la borne définie par la première fonction linéaire ou par la seconde fonction affine.

**5.** Système de pilotage suivant l'une des revendications précédentes, dans lequel le module de synchronisation (28) est configuré pour identifier la première accélération angulaire ($\omega_0$) à la constante d'accélération moyenne angulaire (A) du moteur (5), tant que la valeur absolue de l'écart entre la vitesse angulaire effective (N) du moteur (5) et une première vitesse angulaire cible ($n_1$) est supérieure à un premier seuil d'écart ($\Delta n_1$).

**6.** Système de pilotage suivant la revendication 5, dans lequel le module de synchronisation (28) est configuré, quand la valeur absolue de l'écart entre la vitesse angulaire effective (N) du moteur (5) et la première vitesse angulaire cible ($n_1$) est inférieure au premier seuil ($\Delta n_1$), pour déterminer la première accélération angulaire ($\omega_0$) comme un barycentre pondéré par cet écart, entre l'accélération moyenne angulaire (A), et la valeur objectif d'accélération ($\Omega$).

**7.** Système de pilotage suivant l'une des revendications précédentes, dans lequel le module de synchronisation (28) est configuré pour définir la consigne de couple moteur ($C_m$) à partir de la consigne de couple primaire ($\hat{C}$), à laquelle il ajoute un terme proportionnel à une inertie (J) du moteur (5) et proportionnel à la première accélération angulaire ($\omega_0$).

**8.** Système de pilotage suivant l'une des revendications précédentes, dans lequel le module de synchronisation (28) est configuré pour définir la consigne de couple transmissible ($C_t$) par le moyen d'embrayage (19, 20) à partir de la consigne de couple primaire ($\hat{C}$), à laquelle un régulateur proportionnel intégral (PI) ajoute un terme correctif intégré à partir de l'erreur constituée par la différence entre la seconde accélération angulaire ($\omega_f$) et l'accélération angulaire effective $\left( \dfrac{dN}{dt} \right)$ du moteur.

**9.** Système de pilotage suivant l'une des revendications précédentes, dans lequel le module de synchronisation (28) est configuré pour identifier la seconde accélération angulaire ($\omega_f$) à une accélération inertielle égale à la différence entre le couple effectif (C) du moteur (5) et la consigne de couple primaire ($\hat{C}$), divisée par l'inertie (J) du moteur (5), tant que la valeur absolue de l'écart entre la vitesse angulaire effective (N) du moteur (5) et une deuxième vitesse angulaire cible ($n_{fin}$) est supérieure à un deuxième seuil ($\Delta n_2$).

**10.** Système de pilotage suivant la revendication 9, dans lequel le module de synchronisation (28) est configuré, quand la valeur absolue de l'écart entre la vitesse angulaire effective (N) du moteur (5) et la deuxième vitesse angulaire cible ($n_{fin}$) est inférieure au deuxième seuil ($\Delta n_2$), pour déterminer la seconde accélération angulaire ($\omega_f$) comme un barycentre pondéré par cet écart, entre l'accélération inertielle, et la valeur objectif ($\Omega$) d'accélération du moteur (5).

**11.** Système de pilotage suivant l'une des revendications 9 à 10, dans lequel le module de synchronisation (28) est configuré pour calculer la deuxième vitesse angulaire cible ($n_{fin}$) en multipliant la vitesse angulaire actuelle (R) de rotation des roues (31) par un coefficient de démultiplication ($k_2$) associé au deuxième rapport, et dans lequel le module de synchronisation (28) est configuré pour calculer la première vitesse angulaire cible ($n_1$) comme une valeur intermédiaire entre la deuxième vitesse angulaire cible ($n_{fin}$), et la vitesse angulaire de rotation effective du moteur (N) au début de la phase de synchronisation.

**12.** Système de pilotage suivant l'une des revendications précédentes, dans lequel le module de synchronisation (28) est configuré pour calculer la valeur objectif d'accélération angulaire ($\Omega$) du moteur en multipliant l'accélération angulaire actuelle $\left( \dfrac{dR}{dt} \right)$ des dt roues (31) par un coefficient de démultiplication ($k_2$) associé au deuxième rapport.

**13.** Procédé de pilotage d'un groupe motopropulseur de véhicule automobile comprenant un moteur et une boîte de vitesses (1) munie d'au moins un moyen d'embrayage (19, 20) pilotable en couple, le procédé incluant une étape, pendant un changement d'un premier rapport vers un second rapport de la boîte, où le couple transmis aux roues (31) du véhicule est obtenu en imposant au moteur (5) une consigne de couple moteur ($C_m$) calculée en fonction d'une première accélération angulaire de consigne ($\omega_0$), et en imposant au moyen d'embrayage (19, 20) une consigne de couple transmissible ($C_t$) calculée en fonction d'une seconde accélération angulaire de consigne ($\omega_f$), les deux accélérations angulaires convergeant vers une même valeur objectif ($\Omega$) d'accélération du moteur (5), la première accélération angulaire de consigne ($\omega_0$) étant un barycentre entre la valeur objectif ($\Omega$) d'accélération du moteur (5) et une valeur d'accélération moyenne angulaire (A), définie par une fonction bornée, soit par une première fonction linéaire d'une consigne de couple primaire ($\hat{C}$), soit par une seconde fonction affine de la même consigne

de couple primaire ($\hat{C}$).

**14.** Procédé de pilotage suivant la revendication 13, dans lequel on détermine la consigne de couple primaire ($\hat{C}$) à partir d'une valeur de couple cartographiée en fonction d'une pression ou d'une position de pédale d'accélération (34) du véhicule.

# FIG.1

## FIG.2a

Régime
(rad/s)

63

60

64

t(s)

## FIG.2b

62

Couples
(Nm)

61

65

$\hat{C}$

66

$C_0$

0

$t_0$     $t_1$     $t_2$     t(s)

## FIG.3a

Régime
(rad/s)

73

70

74

t(s)

## FIG.3b

62

Couples
(Nm)

66

$C_0$

71

0

$t_0$   $t_1$   $t_2$

t(s)

75

# FIG.4

Europäisches
Patentamt

European
Patent Office

Office européen
des brevets

# RAPPORT DE RECHERCHE EUROPEENNE

Numéro de la demande

EP 10 30 6456

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 921 350 A2 (HITACHI LTD [JP]) 14 mai 2008 (2008-05-14) * figures 1,4,12 * * colonne 14, ligne 31 - ligne 33 * * colonne 15, ligne 7 - ligne 11 * * alinéa [0104] - alinéa [0113] * ----- | 1-13 | INV. F16H61/04 F16H63/50 |
| A | FR 2 838 389 A1 (LUK LAMELLEN & KUPPLUNGSBAU [DE]) 17 octobre 2003 (2003-10-17) * page 3, ligne 29 - page 4, ligne 8; figures 1,2 * * page 6, ligne 14 - page 9, ligne 24 * ----- | 1-13 | |
| A | FR 2 785 961 A1 (RENAULT [FR]) 19 mai 2000 (2000-05-19) * figures 2,3 * * page 10, ligne 23 - page 18, ligne 32 * ----- | 1-13 | |
| A | FR 2 804 911 A1 (LUK LAMELLEN & KUPPLUNGSBAU [DE]) 17 août 2001 (2001-08-17) * le document en entier * ----- | 1-13 | DOMAINES TECHNIQUES RECHERCHES (IPC) F16H |

Le présent rapport a été établi pour toutes les revendications

| Lieu de la recherche | Date d'achèvement de la recherche | Examinateur |
|---|---|---|
| La Haye | 3 mai 2011 | Bourgoin, J |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 10 30 6456

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-05-2011

| Document brevet cité au rapport de recherche | | Date de publication | Membre(s) de la famille de brevet(s) | | Date de publication |
|---|---|---|---|---|---|
| EP 1921350 | A2 | 14-05-2008 | AUCUN | | |
| FR 2838389 | A1 | 17-10-2003 | WO | 03086806 A1 | 23-10-2003 |
| | | | DE | 10316446 A1 | 23-10-2003 |
| FR 2785961 | A1 | 19-05-2000 | DE | 69905485 D1 | 27-03-2003 |
| | | | DE | 69905485 T2 | 18-12-2003 |
| | | | EP | 1128977 A1 | 05-09-2001 |
| | | | ES | 2192886 T3 | 16-10-2003 |
| | | | WO | 0029244 A1 | 25-05-2000 |
| | | | JP | 2003506236 T | 18-02-2003 |
| | | | JP | 2010159764 A | 22-07-2010 |
| | | | US | 6547697 B1 | 15-04-2003 |
| FR 2804911 | A1 | 17-08-2001 | AU | 4042601 A | 27-08-2001 |
| | | | BR | 0108322 A | 18-03-2003 |
| | | | WO | 0160651 A1 | 23-08-2001 |
| | | | DE | 10101597 A1 | 16-08-2001 |
| | | | DE | 10190489 D2 | 21-11-2002 |
| | | | GB | 2380775 A | 16-04-2003 |
| | | | IT | MI20010308 A1 | 14-08-2002 |
| | | | JP | 2003522670 T | 29-07-2003 |
| | | | US | 2003054920 A1 | 20-03-2003 |

EPO FORM P0460

Pour tout renseignement concernant cette annexe : voir Journal Officiel de l'Office européen des brevets, No.12/82